(19) Europäisches Patentamt
European Patent Office
Office européen des brevets

(11) **EP 2 781 687 A1**

(12) **DEMANDE DE BREVET EUROPEEN**

(43) Date de publication:
**24.09.2014 Bulletin 2014/39**

(51) Int Cl.:
***E21B 43/00*** *(2006.01)*

(21) Numéro de dépôt: **14305325.4**

(22) Date de dépôt: **06.03.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **20.03.2013 FR 1352492**

(71) Demandeur: **IFP Energies nouvelles**
**92852 Rueil-Malmaison Cedex (FR)**

(72) Inventeurs:
• **PREUX, Christophe**
**78260 ACHERES (FR)**
• **LE RAVALEC, Mickaele**
**92500 RUEIL-MALMAISON (FR)**
• **ENCHERY, Guillaume**
**92500 RUEIL-MALMAISON (FR)**

(54) **Procédé d'exploitation d'un réservoir géologique au moyen d'un modèle de réservoir cohérent avec un modèle géologique par choix d'une méthode d'une mise a l'échelle**

(57)      L'invention concerne un procédé d'exploitation (EXP) d'un réservoir géologique au moyen d'un modèle de réservoir cohérent avec un modèle géologique (MG). Pour ce procédé, on construit plusieurs modèles de réservoir (MRn) au moyen de différentes méthodes de mise à l'échelle. Grâce à une étude de connectivité, menée à partir d'un algorithme permettant de résoudre le problème du plus court chemin (DIS) appliqué aux maillages, on identifie les chemins d'écoulement principaux entre les puits pour le modèle géologique (MG) ainsi que pour les différents modèles réservoir (MRn). On sélectionne alors le modèle réservoir (MR) pour lequel les longueurs des chemins principaux d'écoulement entre puits sont les plus proches de celles obtenues pour le modèle géologique de départ.

Figure 1

EP 2 781 687 A1

**Description**

La présente invention concerne le domaine technique de l'industrie pétrolière, et plus particulièrement l'exploitation de réservoirs souterrains, tels que des réservoirs pétroliers ou des sites de stockage de gaz.

Afin d'exploiter au mieux les milieux souterrains, les industries pétrolières définissent des modèles permettant de mieux piloter et exploiter les champs pétroliers.

La première étape de ces études consiste à créer un modèle initial appelé modèle géologique qui représente au mieux les données géologiques et pétrophysiques du milieu poreux comme les faciès, les perméabilités ou les porosités de réservoir. Un tel modèle géologique constitue une maquette du sous-sol, représentative à la fois de sa structure et de son comportement. Généralement, ce type de maquette est représenté sur un ordinateur, et l'on parle alors de modèle numérique. Un modèle géologique comporte une grille (ou maillage) de résolution élevée (ou "fine"), généralement tridimensionnelle, associée à une ou plusieurs cartes de propriétés pétrophysiques (porosité, perméabilité, saturation...). L'association consiste à attribuer des valeurs de ces propriétés pétrophysiques à chacune des mailles de la grille.

Généralement, ce modèle géologique est trop volumineux pour qu'on y simule l'écoulement des fluides : le modèle géologique comporte généralement beaucoup trop de mailles pour la puissance des ordinateurs de calcul et la simulation d'écoulement est dans ce cas beaucoup trop longue ou tout simplement impossible à réaliser.

Pour permettre la simulation des écoulements des fluides, on réalise une étape de mise à l'échelle ou encore "d'upscaling". Elle consiste à définir un deuxième modèle plus grossier, dit modèle réservoir. Un tel modèle constitue également une maquette du sous-sol, représentative à la fois de sa structure et de son comportement. Généralement, ce type de maquette est représenté sur un ordinateur, et l'on parle alors de modèle numérique. Un modèle de réservoir comporte une grille (ou maillage), généralement tridimensionnelle, associée à une ou plusieurs cartes de propriétés pétrophysiques (porosité, perméabilité, saturation...).

Le modèle de réservoir comporte moins de mailles que le modèle géologique et peut donc être utilisé pour réaliser les simulations d'écoulement en un temps de calcul raisonnable. Lors de cette étape de mise à l'échelle, les propriétés géologiques et pétrophysiques affectées au modèle fin (modèle géologique) sont transférées vers le modèle grossier (modèle de réservoir) à partir de méthodes de mise à l'échelle. Ces méthodes sont appliquées pour calculer des propriétés équivalentes qui sont attribuées aux mailles grossières.

Les modèles géologiques et les modèles de réservoir bien connus et largement utilisés dans l'industrie pétrolière, permettent de déterminer de nombreux paramètres techniques relatifs à l'étude ou l'exploitation d'un réservoir, d'hydrocarbures par exemple. En effet, puisque le modèle de réservoir est représentatif de la structure du réservoir et de son comportement, l'ingénieur l'utilise par exemple pour déterminer les zones qui ont le plus de chances de contenir des hydrocarbures, les zones dans lesquelles il peut être intéressant/nécessaire de forer un puits d'injection ou de production pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes. De la même façon, la modélisation des sites de stockages de $CO_2$ permet de surveiller ces sites, de détecter des comportements anormaux et de prédire le déplacement du $CO_2$ injecté.

Un modèle de réservoir a donc pour vocation de rendre compte, au mieux, de toutes les informations connues sur un réservoir. Un modèle de réservoir est représentatif lorsqu'une simulation de réservoir pour ce modèle fournit des estimations de données d'historique très proches des données observées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut"), et/ou les données de sismiques répétitives (impédances sismiques 4D dans une ou plusieurs régions, etc.).

Une simulation de réservoir est une technique permettant de simuler les écoulements de fluides au sein d'un réservoir au moyen d'un logiciel appelé simulateur d'écoulement, et du modèle de réservoir. Par exemple, le logiciel PumaFlow ® (IFP Energies nouvelles, France) est un simulateur d'écoulement.

Pour ce faire, l'intégration de toutes les données disponibles est indispensable. Ces données comprennent en général :

- des mesures en certains points de la formation géologique, par exemple dans des puits. Ces données sont dites statiques car elles sont invariables dans le temps (à l'échelle des temps de la production du réservoir).

- des "données d'historique", comprenant des données de production, par exemple les débits de fluide mesurés aux puits, les concentrations de traceurs et des données issues de campagnes d'acquisition sismique répétées à des temps successifs. Ces données sont dites dynamiques car elles évoluent en cours d'exploitation et sont indirectement liées aux propriétés attribuées aux mailles du modèle de réservoir.

Les méthodes de mise à l'échelle sont nombreuses et l'ingénieur de réservoir doit faire un choix. Parmi les méthodes utilisées, on peut citer par exemple la méthode arithmétique, la méthode harmonique, la méthode géométrique, la méthode algébrique et isotrope (de l'anglais "algebraic isotropic"), la méthode de combinaison de bornes et les méthodes numériques basées sur la résolution de l'équation de Darcy. Cette liste n'est pas exhaustive. Il est très difficile de savoir par avance quelle méthode fournira les résultats les plus satisfaisants, c'est-à-dire les plus proches des résultats qu'on a pour le modèle fin, sans toutes les tester par le biais de simulations d'écoulement.

Le choix de la méthode "d'upscaling" à utiliser est crucial pour la précision du modèle réservoir. Différents critères de choix ont été proposés par plusieurs auteurs, ces critères permettent de quantifier l'erreur induite sur le modèle lors de la phase "d'upscaling" :

- Qi, D., 2010. Upscaling Extent vs. Information Loss in Reservoir Upscaling. Petroleum Science and Technology, Volume 28, Issue 12, pp 1197-1202.
- Sablok, C., Aziz, K., 2005. Upscaling and discretization errors in reservoir simulation. SPE simulation symposium, 31 january-2 february 2005, Houston, Texas, U.S.A, SPE 93372.
- Preux, C., 2011. Study of evaluation criteria for reservoir upscaling, 73rd EAGE Conference & Exhibition incorporating SPE EUROPEC 2011 Vienna, Austria, 23-26 May.

Toutefois, aucun de ces documents ne propose de critère basé sur une étude de connectivité. Or, la connectivité est un paramètre important permettant de rendre le modèle de réservoir cohérent avec le modèle géologique et a fortiori avec les propriétés du réservoir géologique.

Pour résoudre ce problème, l'invention concerne un procédé d'exploitation d'un réservoir géologique au moyen d'un modèle de réservoir cohérent avec un modèle géologique. Pour ce procédé, on construit plusieurs modèles de réservoir au moyen de différentes méthodes de mise à l'échelle. Grâce à une étude de connectivité, menée à partir d'un algorithme permettant de résoudre le problème du plus court chemin appliqué aux maillages, on identifie les chemins d'écoulement principaux entre les puits pour le modèle géologique ainsi que pour les différents modèles réservoir. On sélectionne alors le modèle réservoir pour lequel les longueurs des chemins principaux d'écoulement entre puits sont les plus proches de celles obtenues pour le modèle géologique de départ. Ce calcul de distances entre puits est très rapide et permet de choisir la méthode "d'upscaling" la plus appropriée pour ce modèle de champ pétrolier.

Le procédé selon **l'invention**

L'invention concerne un procédé d'exploitation d'un réservoir géologique au moyen d'un modèle géologique représentatif de propriétés pétrophysiques et géologiques dudit réservoir, ledit réservoir étant traversé par au moins un puits producteur et au moins un puits injecteur pour l'injection d'au moins un fluide dans ledit réservoir. Pour ce procédé on réalise les étapes suivantes :

a) on construit une pluralité de modèles de réservoir représentatifs desdites propriétés dudit réservoir à partir dudit modèle géologique au moyen d'au moins deux méthodes de changement d'échelle ;
b) on détermine au moins une distance d'écoulement dudit fluide selon le chemin le plus court entre ledit puits injecteur et ledit puits producteur pour ledit modèle géologique et pour chaque modèle de réservoir au moyen d'un algorithme de calcul de chemin le plus court, ledit algorithme de chemin le plus court étant contraint par lesdites propriétés du réservoir de chaque modèle ;
c) on simule les écoulements dudit fluide et d'hydrocarbures présents dans ledit réservoir au moyen d'un simulateur d'écoulement et du modèle de réservoir qui minimise la différence entre ladite distance d'écoulement selon ledit chemin le plus court du modèle de réservoir et ladite distance d'écoulement selon ledit chemin le plus court dudit modèle géologique ; et
d) on exploite ledit réservoir géologique au moyen de ladite simulation.

Selon l'invention, ledit modèle géologique est formé au moyen de simulations géostatistiques à partir de données mesurées pour ledit réservoir géologique.

Avantageusement, lesdites méthodes de changement d'échelle sont choisies notamment parmi : une méthode arithmétique, une méthode harmonique, une méthode géométrique, une méthode algébrique et isotrope, une méthode de combinaison de bornes et des méthodes numériques basées sur la résolution de l'équation de Darcy.

De préférence, ledit algorithme de chemin le plus court est l'algorithme de Dijkstra.

De manière avantageuse, ledit modèle géologique et lesdits modèles de réservoir étant constitués d'un ensemble de mailles, la longueur d'un lien entre deux mailles adjacentes i et j utilisée par ledit algortihme de chemin le plus court est définie par une formule du type :

$$Longueur_{i \to j} = \frac{\sqrt{Vp_i \times Vp_j}}{T_{i \leftrightarrow j}(P_i - P_j)} \text{ avec } T_{i \leftrightarrow j} = \frac{A_{ij}K_{ij}}{D_{ij}}$$

avec :

$T_{i \leftrightarrow j}$ :     la transmissivité entre les mailles i et j,

$A_{ij}$ :     la surface d'intersection entre les mailles i et j,

$D_{ij}$ :     la distance entre les mailles i et j,

$K_{ij}$ :     la perméabilité moyenne le long de la connexion entre les mailles i et j,

$Vp_i$ :     le volume poreux de la maille i,

$Vp_j$ :     le volume poreux de la maille j,

$P_i$ :     la pression de fluide dans la maille i, et

$P_j$ :     la pression de fluide dans la maille j.

En outre, avant l'exploitation dudit réservoir, on peut réaliser une étape de calage d'historique pour déterminer le modèle de réservoir qui minimise une fonction objectif, et dans lequel pour ladite étape de calage d'historique, la mise à l'échelle dudit modèle géologique est effectuée avec la méthode de changement d'échelle qui minimise la différence entre ladite distance d'écoulement selon ledit chemin le plus court du modèle de réservoir et ladite distance d'écoulement selon ledit chemin le plus court dudit modèle géologique.

De plus, avant l'exploitation dudit réservoir, on peut réaliser une étape d'analyse de sensibilités desdites propriétés dudit réservoir.

Selon un mode de réalisation de l'invention, au moins une méthode de changement d'échelle étant paramétrable, on répète les étapes a) et b) en modifiant au moins un paramètre de ladite méthode de changement d'échelle paramétrable pour minimiser la différence entre ladite distance d'écoulement selon ledit chemin le plus court du modèle de réservoir et ladite distance d'écoulement selon ledit chemin le plus court dudit modèle géologique.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'invention, lorsque ledit programme est exécuté sur un ordinateur.

Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre un algorithme du procédé selon l'invention.
La figure 2 est un exemple illustratif d'un modèle géologique.
La figure 3 illustre la pression et le débit d'eau injecté déterminés pour différents modèles de réservoir obtenus par différentes méthodes de mise à l'échelle du modèle géologique de l'exemple 2.
La figure 4 illustre la pression à l'injecteur pour certains modèles de réservoir pour l'exemple de la figure 3.
La figure 5 illustre la pression de fond et le débit obtenu en surface au puits producteur pour l'exemple de la figure 3.

Description **détaillée** de l'invention

L'invention concerne un procédé d'exploitation d'un réservoir géologique, notamment d'un réservoir contenant des hydrocarbures. Le réservoir géologique est traversé par au moins un puits producteur et au moins un puits injecteur, pour l'injection d'au moins un fluide (par exemple, de l'eau) dans le réservoir. Par "hydrocarbures", on entend au sens de la présente invention des produits pétrolifères tels que du pétrole ou de l'huile brute, du pétrole ou de l'huile extra-lourde, des sables asphalténiques, des schistes bitumineux et des gaz présents dans une formation souterraine.

Au moyen du procédé selon l'invention, on définit un schéma d'exploitation du réservoir au moyen d'une simulation d'écoulement pour un modèle de réservoir représentatif des propriétés pétrophysiques et géologiques du réservoir. Le modèle de réservoir utilisé est choisi parmi plusieurs modèles de réservoir obtenus par différentes méthodes de mise à l'échelle.

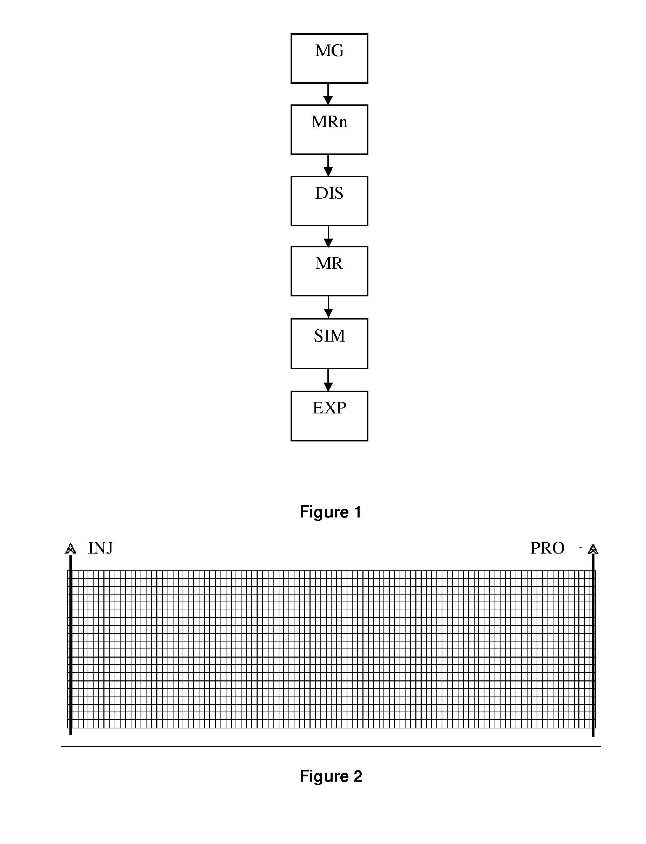

La figure 1 illustre les différentes étapes du procédé selon l'invention:

1. Obtention d'un modèle géologique du réservoir (MG)
2. Construction de plusieurs modèles de réservoir (MRn)
3. Calcul des distances d'écoulement selon le chemin le plus court (DIS)
4. Choix du modèle de réservoir (MR)
5. Simulation d'écoulement (SIM)
6. Exploitation du réservoir géologique (EXP)

1. Obtention d'un modèle géologique du réservoir (MG)

Cette première étape consiste à construire au moyen d'un logiciel adapté un modèle géologique comprenant un maillage et des propriétés pétrophysiques appliquées aux mailles. Avantageusement, le modèle géologique est formé au moyen de simulations géostatistiques à partir de données mesurées pour ledit réservoir géologique. Ces données mesurées peuvent être des mesures en certains points de la formation géologique, par exemple dans des puits, et optionnellement des "données d'historique", comprenant des données de production, par exemple les débits de fluide mesurés aux puits, les concentrations de traceurs et des données issues de campagnes d'acquisition sismique répétées à des temps successifs. On rappelle que le modèle géologique est un modèle qui comporte un maillage fin.

2. Construction de plusieurs modèles de réservoir (MRn)

Lors de cette étape, on construit plusieurs modèles de réservoir obtenus par différentes (au moins deux) méthodes de mise à l'échelle du modèle géologique. On rappelle que le modèle de réservoir est un modèle comportant un maillage grossier, c'est-à-dire comprenant moins de mailles que le maillage fin du modèle géologique. Lors de cette étape de mise à l'échelle, les propriétés géologiques et pétrophysiques affectées au modèle fin (modèle géologique) sont transférées vers le modèle grossier (modèle de réservoir).

Les différentes méthodes de mise à l'échelle peuvent être choisies notamment parmi : une méthode arithmétique, une méthode harmonique, une méthode géométrique, une méthode algébrique et isotrope (de l'anglais "algebaric isotropic"), une méthode de combinaison de bornes et des méthodes numériques basées sur la résolution de l'équation de Darcy... Cette liste n'est pas exhaustive. Les méthodes de mise à l'échelle sont appliquées pour calculer des propriétés équivalentes qui sont attribuées aux mailles grossières.

3. Calcul des distances d'écoulement selon le chemin le plus court (DIS)

Pour chacun des modèles (c'est-à-dire pour le modèle géologique et les modèles de réservoir), on détermine au moins une distance d'écoulement du fluide selon le chemin le plus court entre le puits injecteur et le puits producteur. Avantageusement, pour chaque puits injecteur, on calcule tous les chemins entre celui-ci et ses puits producteurs, c'est à dire les puits producteurs qui sont affectés par l'injecteur (le choix des producteur "liés" à l'injecteur se fait généralement en regardant le schéma d'exploitation : dans le cas d'un "five spot", on calcule les chemins entre le puits injecteur et ses puits producteurs mais on ne calcule pas la distance entre ce puits injecteur et un puits producteur qui fait parti d'un autre "five spot" plus loin sur le champs : ce n'est pas utile.

Ce chemin le plus court est dépendant des propriétés pétrophysiques et géologiques du réservoir, notamment de la perméabilité, contenues dans les mailles des modèles. Selon l'invention, pour calculer ce chemin le plus court, on met en oeuvre un algorithme de calcul de chemin le plus court.

Les problèmes de calcul du chemin le plus court, appelés également problèmes de cheminement sont des problèmes classiques de la théorie des graphes. L'objectif est de calculer une route entre des sommets d'un graphe qui minimise ou maximise une certaine fonction économique. Il existe des algorithmes polynomiaux pour résoudre ce problème, tel que l'algorithme de Dijkstra.

Selon un mode de réalisation de l'invention, on utilise l'algorithme de Dijkstra pour déterminer la distance d'écoulement entre le puits injecteur et le puits producteur selon le plus court chemin. D'autres algorithmes, tels que l'algorithme de Ford-Bellman ou l'algorithme de Gabow peuvent être utilisés pour le procédé selon l'invention. Cette liste n'est pas exhaustive.

Avantageusement, la longueur d'un lien entre deux mailles adjacentes i et j des modèles utilisée par l'algorithme de calcul de chemin le plus court est définie par une formule du type :

$$Longueur_{i \to j} = \frac{\sqrt{Vp_i \times Vp_j}}{T_{i \leftrightarrow j}(P_i - P_j)} \text{ avec } T_{i \leftrightarrow j} = \frac{A_{ij} K_{ij}}{D_{ij}}$$

avec :

$T_{i \leftrightarrow j}$ : la transmissivité entre les mailles i et j,

$A_{ij}$ : la surface d'intersection entre les mailles i et j,

$D_{ij}$ : la distance entre les mailles i et j,

$K_{ij}$ : la perméabilité moyenne le long de la connexion entre les mailles i et j,

$Vp_i$ : le volume poreux de la maille i,

$Vp_j$ : le volume poreux de la maille j,

$P_i$ : la pression de fluide dans la maille i, et

$P_j$ : la pression de fluide dans la maille j.

### 4. Choix du modèle de réservoir (MR)

Lors de cette étape, on compare les distances obtenues pour chaque modèle réservoir à celles obtenues pour le modèle géologique.

On choisit alors le modèle réservoir pour lequel les distances d'écoulement entre puits sont les plus proches de celles du modèle géologique. Si on calcule plusieurs distances entre plusieurs puits injecteurs et plusieurs puits producteurs, on peut comparer la somme des distances, on peut comparer la moyenne des distances, ou on peut appliquer la méthode des moindres carrés.

### 5. Simulation d'écoulement (SIM)

Au moyen d'un simulateur d'écoulement, par exemple le logiciel PumaFlow ® (IFP Energies nouvelles, France), on simule les écoulements du fluide injecté et des hydrocarbures présents dans le réservoir à partir du modèle de réservoir choisi à l'étape précédente. On peut simuler par exemple la récupération de pétrole ou les déplacements des fluides (par exemple les gaz stockés) dans le réservoir.

Selon un mode de réalisation de l'invention, à partir du modèle de réservoir déterminé lors des étapes précédentes, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés... Pour chacun de ces schémas, il convient de déterminer leurs prévisions de production. Ces prévisions de production probabilistes sont obtenues au moyen du logiciel de simulation d'écoulement ainsi qu'au moyen du modèle numérique de réservoir choisi.

On définit alors un ou plusieurs schémas d'exploitation possibles adapté au modèle de réservoir. Pour chacun de ces schémas, on peut déterminer les réponses par simulation.

A partir des prévisions de productions probabilistes définies pour chaque schéma d'exploitation, les spécialistes peuvent par comparaison choisir le schéma d'exploitation qui leur semble le plus pertinent. Par exemple :

- en comparant le maximum du volume d'huile récupéré, on peut déterminer le schéma de production susceptible de fournir le maximum de récupération ou d'être le plus rentable.

- en comparant l'écart type du volume d'huile récupéré, on peut déterminer le schéma de production le moins risqué.

### 6. Exploitation du réservoir géologique (EXP)

On exploite alors le réservoir en fonction de la simulation ou le cas échéant en fonction du schéma d'exploitation le plus pertinent, par exemple en forant de nouveaux puits (producteur ou injecteur), en modifiant les outils utilisés, en modifiant les débits et/ou la nature de fluides injectés...

L'invention concerne par ailleurs un produit programme d'ordinateur téléchargeable depuis un réseau de communication et/ou enregistré sur un support lisible par ordinateur et/ou exécutable par un processeur. Ce programme comprend des instructions de code de programme pour la mise en oeuvre du procédé tel que décrit ci-dessus, lorsque ledit programme est exécuté sur un ordinateur.

Variantes du procédé

Selon une première variante de réalisation du procédé selon l'invention, avant l'étape d'exploitation du réservoir géologique, on réalise une étape de calage d'historique des modèles. Le calage d'historique consiste à modifier les paramètres du modèle géologique, tels que les perméabilités, les porosités ou les skins de puits (représentant les endommagements autour du puits), les connections de failles..., pour minimiser les écarts entre les données d'historique mesurées et les réponses correspondantes simulées à partir du modèle de réservoir. Les paramètres peuvent être liés à des régions géographiques comme les perméabilités ou porosités autour d'un puits ou de plusieurs puits. L'écart entre les données d'historique et réponses simulées forme une fonctionnelle, dite fonction objectif. Le problème du calage d'historique se résout en minimisant cette fonctionnelle.

Pour la minimisation de la fonction objectif, on modifie à chaque itération le modèle géologique puis pour effectuer une simulation d'écoulement, on applique un changement d'échelle pour former au moins un modèle de réservoir. Avantageusement, on utilise à chaque itération la même méthode de changement d'échelle, qui correspond à la méthode de changement d'échelle qui minimise la différence des distances des chemins les plus courts entre le modèle géologique et les modèles de réservoir. Alternativement, en plus de la modification du modèle géologique, on peut construire à chaque itération une pluralité de modèles de réservoir au moyen de plusieurs méthodes de changement d'échelle et on en déduit à chaque itération la méthode "d'upscaling" la plus appropriée.

Selon une deuxième variante de réalisation du procédé selon l'invention, avant l'étape d'exploitation, on réalise une étape de sensibilités des propriétés pétrophysiques et géologiques des modèles de réservoir pour déterminer leur influence sur les simulations.

Selon une troisième variante de réalisation du procédé selon l'invention, au moins une des méthodes de changement d'échelle est paramétrable et on réalise une boucle d'optimisation pour déterminer le paramètre de la méthode qui minimise la différence des distances de chemin le plus court. Par exemple, pour cette variante de réalisation, on peut mettre en oeuvre les étapes suivantes :

1. on choisit une valeur du paramètre p de la méthode de changement d'échelle,
2. on construit au moins un modèle de réservoir au moyen de la méthode de changement d'échelle et du paramètre p,
3. on détermine les distances de chemin le plus court tels que décrit ci-dessus,
4. on modifie le paramètre p et on réitère les étapes 2 et 3,
5. on choisit le modèle de réservoir qui minimise la différence des distances du chemin le plus court.

Exemple d'application

Afin de montrer l'intérêt de ce procédé pour l'exploitation des gisements d'hydrocarbures, on l'applique sur un cas simplifié de champ pétrolier.

On se concentre ici sur un modèle géologique comprenant 100*1*20 = 2000 mailles fines. Ce modèle est habillé en propriétés pétrophysiques à partir d'outils de simulation géostatistique. On dispose en outre d'une grille réservoir de 25*1*5 mailles. De plus, on considère deux puits, un puits injecteur (INJ) situé sur le bord gauche de la grille et un puits producteur (PRO) situé sur le bord droit de la grille, comme le montre la figure 2.

Afin d'habiller la grille réservoir avec des propriétés pétrophysiques, on teste différentes méthodes de mise à l'échelle :

- la méthode arithmétique,
- la méthode harmonique,
- la méthode géométrique,
- la méthode "algebraic isotropic"
- la méthode de combinaison de bornes,
- la méthode numérique basée sur la résolution de Darcy.

On étudie la connectivité pour tous les modèles ainsi obtenus en utilisant un algorithme de Dijkstra résolvant le problème du plus court chemin, ce qui nous donne les valeurs suivantes de distances entre les deux puits exposées dans le tableau 1 ci-dessous :

Tableau 1 - Distances du chemin le plus court pour différents modèles de réservoir

| Modèles | Distance |
|---|---|
| Géologique (FIN) | 0,25211331 |
| | |
| Arithmétique (MR1) | 0,583567881 |
| Harmonique (MR2) | 16,25388547 |
| Géométrique (MR3) | 3,160463059 |
| Algebraic isotropic (MR4) | 0,732890674 |
| Combinaison de bornes (MR5) | 0,732890674 |
| Numérique (MR6) | 0,671955491 |

D'après les valeurs obtenues, on en déduit que la meilleure méthode pour ce cas est la méthode arithmétique (MR1). La méthode harmonique (MR2) est la plus mauvaise, suivie de la méthode géométrique (MR3). Enfin, les trois dernières méthodes (algebraic isotropic (MR4), combinaison de bornes (MR5) et numérique (MR6)) sont sensiblement au même niveau de précision.

Afin de vérifier cela, on simule une injection d'eau et on vérifie que les réponses aux puits en termes de récupération d'hydrocarbures et de fonctionnement du champ sont cohérentes avec les résultats obtenus en suivant cette méthodologie.

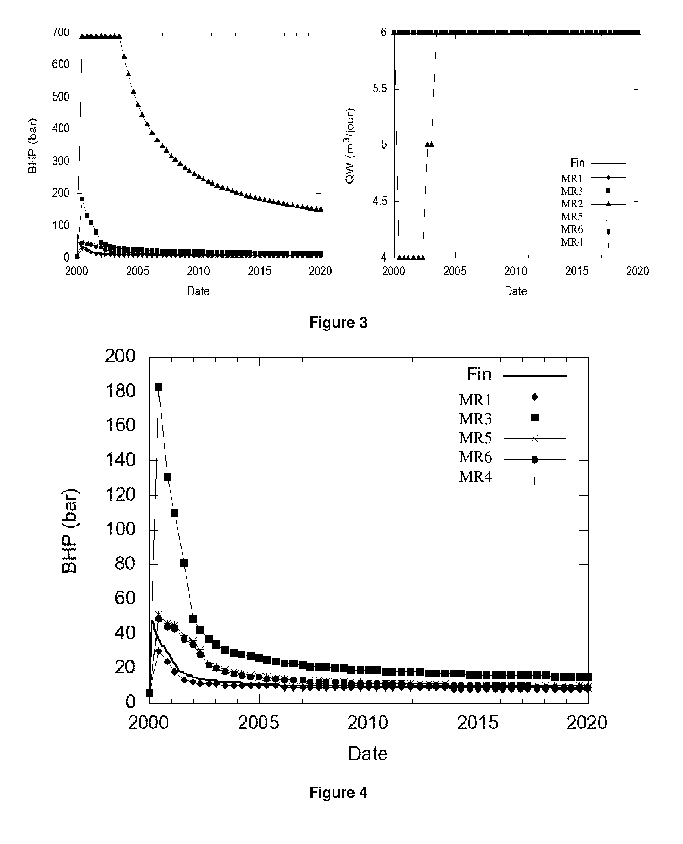

La figure 3 illustre pour ces différents modèles, la pression de l'injecteur (BHP) et le dédit d'eau injecté (QW) en fonction du temps (Date). En regardant les résultats à l'injecteur, on voit tout de suite que la méthode harmonique (MR2) est la plus mauvaise. Elle ne respecte pas le fonctionnement du puits qui fonctionne au début à pression imposée. Ceci est en adéquation avec les résultats de la méthodologie (cf. Figure 3)

On élimine donc la méthode harmonique et on poursuit l'analyse des résultats de simulation d'écoulement obtenus aux puits.

On continue d'examiner la pression au fond (BHP) du puits injecteur (cf. figure 4). On remarque que la méthode géométrique (MR3) surestime largement la pression par rapport à toutes les autres méthodes. Le choix du modèle de réservoir tel qu'utilisé par le procédé selon l'invention avait effectivement classé cette méthode comme la seconde plus mauvaise. On peut donc l'éliminer.

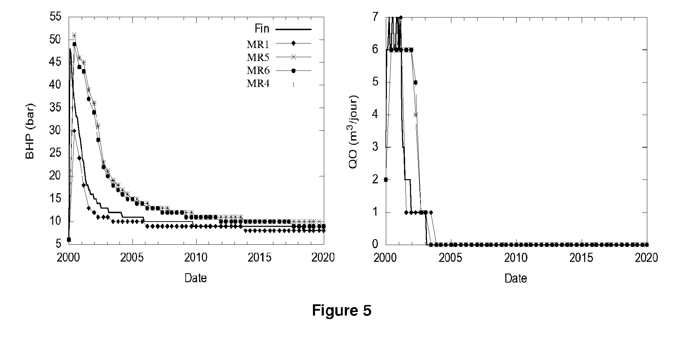

En étudiant la pression (BHP) à l'injecteur (cf. figure 4), ainsi que le débit d'huile (QO) en condition surface au producteur (cf. figure 5), on remarque que la méthode la plus intéressante, c'est-a-dire la plus proche de la simulation fine est la méthode arithmétique (MR1), comme le prévoit la méthodologie selon l'invention. En outre, on vérifie que les trois dernières méthodes (MR4, MR5 et MR6) donnent des résultats sensiblement similaires, mais un peu moins bons que ceux obtenus avec la méthode arithmétique (MR1).

**Revendications**

1. Procédé d'exploitation d'un réservoir géologique au moyen d'un modèle géologique représentatif de propriétés pétrophysiques et géologiques dudit réservoir, ledit réservoir étant traversé par au moins un puits producteur et au moins un puits injecteur pour l'injection d'au moins un fluide dans ledit réservoir, **caractérisé en ce qu'**on réalise les étapes suivantes :

   a) on construit une pluralité de modèles de réservoir représentatifs desdites propriétés dudit réservoir à partir dudit modèle géologique au moyen d'au moins deux méthodes de changement d'échelle ;
   b) on détermine au moins une distance d'écoulement dudit fluide selon le chemin le plus court entre ledit puits injecteur et ledit puits producteur pour ledit modèle géologique et pour chaque modèle de réservoir au moyen d'un algorithme de calcul de chemin le plus court, ledit algorithme de chemin le plus court étant contraint par lesdites propriétés du réservoir de chaque modèle ;
   c) on simule les écoulements dudit fluide et d'hydrocarbures présents dans ledit réservoir au moyen d'un simulateur d'écoulement et du modèle de réservoir qui minimise la différence entre ladite distance d'écoulement selon ledit chemin le plus court du modèle de réservoir et ladite distance d'écoulement selon ledit chemin le plus court dudit modèle géologique ; et

d) on exploite ledit réservoir géologique au moyen de ladite simulation.

2. Procédé selon la revendication 1, dans lequel ledit modèle géologique est formé au moyen de simulations géostatistiques à partir de données mesurées pour ledit réservoir géologique.

3. Procédé selon l'une des revendications précédentes, dans lequel lesdites méthodes de changement d'échelle sont choisies notamment parmi : une méthode arithmétique, une méthode harmonique, une méthode géométrique, une méthode algébrique et isotrope, une méthode de combinaison de bornes et des méthodes numériques basées sur la résolution de l'équation de Darcy.

4. Procédé selon l'une des revendications précédentes, dans lequel ledit algorithme de chemin le plus court est l'algorithme de Dijkstra.

5. Procédé selon l'une des revendications précédentes, dans lequel ledit modèle géologique et lesdits modèles de réservoir étant constitués d'un ensemble de mailles, la longueur d'un lien entre deux mailles adjacentes i et j utilisée par ledit algortihme de chemin le plus court est définie par une formule du type :

$$Longueur_{i \to j} = \frac{\sqrt{Vp_i \times Vp_j}}{T_{i \leftrightarrow j}(P_i - P_j)} \text{ avec } T_{i \leftrightarrow j} = \frac{A_{ij} K_{ij}}{D_{ij}}$$

avec :

$T_{i \leftrightarrow j}$ : la transmissivité entre les mailles i et j,
$A_{ij}$ : la surface d'intersection entre les mailles i et j,
$D_{ij}$ : la distance entre les mailles i et j,
$K_{ij}$ : la perméabilité moyenne le long de la connexion entre les mailles i et j,
$Vp_i$ : le volume poreux de la maille i,
$Vp_j$ : le volume poreux de la maille j,
$P_i$ : la pression de fluide dans la maille i, et
$P_j$ : la pression de fluide dans la maille j.

6. Procédé selon l'une des revendications précédentes, dans lequel avant l'exploitation dudit réservoir, on réalise une étape de calage d'historique pour déterminer le modèle de réservoir qui minimise une fonction objectif, et dans lequel pour ladite étape de calage d'historique, la mise à l'échelle dudit modèle géologique est effectuée avec la méthode de changement d'échelle qui minimise la différence entre ladite distance d'écoulement selon ledit chemin le plus court du modèle de réservoir et ladite distance d'écoulement selon ledit chemin le plus court dudit modèle géologique.

7. Procédé selon l'une des revendications 1 à 5, dans lequel avant l'exploitation dudit réservoir, on réalise une étape d'analyse de sensibilités desdites propriétés dudit réservoir.

8. Procédé selon l'une des revendications précédentes, dans lequel au moins une méthode de changement d'échelle étant paramétrable, on répète les étapes a) et b) en modifiant au moins un paramètre de ladite méthode de changement d'échelle paramétrable pour minimiser la différence entre ladite distance d'écoulement selon ledit chemin le plus court du modèle de réservoir et ladite distance d'écoulement selon ledit chemin le plus court dudit modèle géologique.

9. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

**Figure 1**

**Figure 2**

Figure 3

Figure 4

**Figure 5**

Europäisches
Patentamt

European
Patent Office

Office européen
des brevets

**RAPPORT DE RECHERCHE EUROPEENNE**

Numéro de la demande

EP 14 30 5325

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 034 130 A2 (INST FRANCAIS DU PETROLE [FR] IFP ENERGIES NOUVELLES [FR]) 11 mars 2009 (2009-03-11) * abrégé * * alinéa [0017] * ----- | 1-9 | INV. E21B43/00 |
| A | EP 2 466 338 A1 (IFP ENERGIES NOUVELLES [FR]) 20 juin 2012 (2012-06-20) * abrégé * * revendication 1 * ----- | 1-9 | |

| DOMAINES TECHNIQUES RECHERCHES (IPC) |
|---|
| E21B G01V |

Le présent rapport a été établi pour toutes les revendications

| Lieu de la recherche | Date d'achèvement de la recherche | Examinateur |
|---|---|---|
| Munich | 28 avril 2014 | Thomas, Judith |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 2 781 687 A1**

**ANNEXE AU RAPPORT DE RECHERCHE EUROPEENNE
RELATIF A LA DEMANDE DE BREVET EUROPEEN NO.**

EP 14 30 5325

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-04-2014

| Document brevet cité au rapport de recherche | | Date de publication | Membre(s) de la famille de brevet(s) | | Date de publication |
|---|---|---|---|---|---|
| EP 2034130 | A2 | 11-03-2009 | EP FR US | 2034130 A2<br>2920816 A1<br>2009070086 A1 | 11-03-2009<br>13-03-2009<br>12-03-2009 |
| EP 2466338 | A1 | 20-06-2012 | CA EP FR US | 2761953 A1<br>2466338 A1<br>2969206 A1<br>2012158378 A1 | 15-06-2012<br>20-06-2012<br>22-06-2012<br>21-06-2012 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **QI, D.** Upscaling Extent vs. *Information Loss in Reservoir Upscaling. Petroleum Science and Technology,* 2010, vol. 28 (12), 1197-1202
- **SABLOK, C. ; AZIZ, K.** Upscaling and discretization errors in reservoir simulation. *SPE simulation symposium,* 31 Janvier 2005
- **PREUX, C.** Study of evaluation criteria for reservoir upscaling. *73rd EAGE Conference & Exhibition incorporating SPE EUROPEC 2011 Vienna, Austria,* 23 Mai 2011